# Europäisches Patentamt
## European Patent Office
## Office européen des brevets

(19)

(11)    **EP 1 035 160 B1**

(12)    **EUROPEAN PATENT SPECIFICATION**

(45) Date of publication and mention
of the grant of the patent:
**16.10.2002   Bulletin 2002/42**

(21) Application number: **97954964.9**

(22) Date of filing: **25.11.1997**

(51) Int Cl.[7]: **C08K 3/00**, C08K 13/02
// (C08K3/00, 3:32, 3:18, 3:38),
C08K3:30,(C08K13/02, 3:32,
3:18, 5:00, 5:31), C08K5:5313

(86) International application number:
**PCT/RU97/00375**

(87) International publication number:
**WO 99/027006 (03.06.1999 Gazette 1999/22)**

(54) **LIGHT-CONVERTING MATERIAL AND COMPOSITION FOR PRODUCING THE SAME**

LICHT KONVERTIERENDES MATERIAL UND ZUSAMMENSETZUNG ZU DESSEN HERSTELLUNG

MATERIAU TRANSFORMANT LA LUMIERE ET COMPOSITION PERMETTANT DE PRODUIRE CE MATERIAU

(84) Designated Contracting States:
**AT BE CH DE DK ES FI FR GB GR IE IT LI LU MC NL PT SE**

(43) Date of publication of application:
**13.09.2000   Bulletin 2000/37**

(73) Proprietor: **Bratkova, Ljubov**
**Moskow, 117312 (RU)**

(72) Inventors:
• **BRATKOVA, Ljubov Robertovna**
**Moscow, 117312 (RU)**

• **SCHELOKOV, Robert Nikolaevich**
**Moscow, 117312 (RU)**

(74) Representative: **HOFFMANN - EITLE**
**Patent- und Rechtsanwälte**
**Arabellastrasse 4**
**81925 München (DE)**

(56) References cited:
EP-A1- 0 142 773      EP-A1- 0 371 699
FR-A1- 2 581 071      RU-A1- 94 009 874
RU-C1- 2 036 217      RU-C1- 2 047 623
SU-A1- 1 381 128      US-A- 4 376 183

EP 1 035 160 B1

**Description**

Field of the invention

The present invention relates to composite materials, in particular to light-transforming materials used in agriculture, medicine, biotechnology and light industry.

Background of the invention

An object of the invention is to provide a light-transforming material capable of converting the UV light into the red light and retaining this capability for a long period.

This issue became urgent especially first because of the necessity to protect humans, animals and plants against solar UV radiation as well as against technogenic UV radiation (UV radiation) which, as known, causes skin solar bums and stimulates to the development of oncology diseases among them skin melanoma. Secondly, many publications describe favorable effect of the red light, which enhances the activity of catalase, superoxide dismutase and glutathione reductase enzymes (Y.A.Vladimirov et al., " Free Radical Biol. Med. ", N5, 1988, p.281-286), that, in turn, decreases the amount of active forms of oxygen that damages the cell, and also intensifies DNA and protein synthesis (T.I. Karu " Photobiology of low-power laser therapy " in V.S. Letokhov et al. " Laser Science and Technology ", Harwood Academic Publishers, Chur, Switzerland, 1989), that, in turn, promotes healing of wounds, and recovery of skin from solar bums. In addition, red radiation (wavelength ,600-630 nm) is absorbed most efficiently by chlorophyll-b of a green leaf. Hence, photosynthesis runs faster, green weight of plants grows respectively, harvest of greenhouse cultures increases and the period of ripening becomes shorter (Stoy V., Physiol. Plant., 1955, v.8, p.963-986 is reached; Inada K., Plant and cell physiol., 1976, v.17 p. 355-365; GB 2158833).

Materials are known which contain a matrix and an active additive capable of absorbing UV-radiation (US 4081300; JP 53-136050; JP A3-158103, published on 08.07.91; FR 2419955), or capable of providing proportioned UV-emission (WO 94/17135). As an active additive, the material comprises carbon black and phthalocyanine dyes (JP 53-136050), benzophenone or benzotriazole (FR 2419955), n-tert-butylphenyl salicylate or 2-hydroxy-4-metoxybenzophenone (JP A3-158103), compounds of salicylic, citric and oxalic acids in combination with dyes, e.g. blue or violet (WO 94/17135). The matrix is extruded into the film of thermoplastic polymers (US 4081300, JP 53-136050, FR 2419955), or is made of fibrous material (natural or synthetic) (JP A3-158103), or made in the form of plates of thermoplastic polymers (WO 94/17135), or made of nonfibrous material, thread or lacquer (WO 94/17135). A film-like material is intended to be mostly used in agriculture to protect greenhouses and hothouses (US 4081300, JP 53-136050, FR 2419955). A textile-like material is designed to be applied while manufacturing roof hoods and awnings (JP A3-158103), a plate-like material is intended to be employed in making roof hoods, awnings and even. roof overlays (WO 94/17135).

Nevertheless, all these material are unable to transform the UV-light into the red light.

The light-transforming material (CH 667463, GB 2158833) is known which contains a matrix and , at least, one coordination compound of rare-earth metals (europium, samarium, terbium, gadolinium), as an active additive, which provides transformation of UV component of the light into the orange-red spectral range (580-750 nm). The matrix is extruded into the film of thermoplastic polymer. The composition for the production of this material contains an active additive - 0.001-5.0 wt.% and a matrix-forming component - 95.0 - 99.99 wt.%. As the matrix-forming component the composition contains at least one polymer, selected from the group consisting of polyethylene, polypropylene, polyvinyl chloride, polycarbonate (PC), polystyrene, polymethyl methacrylate or their copolymer. However, this material retains its light-transforming activity within no more than 60 days, as the compounds of rare-earth metals used for the production of this material belong to the category of to coordination compounds, which can be quickly decomposed under the action of light.

The light-transforming material (RU 2059999) is known, which contains a matrix and at least one composite compound, as an active additive, of the general formula $[(La_{1-x}Eu_x)O]_m(Lig)_n$, where Lig is F, Cl, Br, O, S, Se, which could also transform the UV component of light into the orange-red spectral range (580-750 nm). This material is made in the form of film of thermoplastic polymer. The composition for the production of this material contains an active additive, 0.05-1.0 wt.% and a matrix-forming agent, 99.0-99.95 wt.%. The composition contains at least one polymer, as the matrix-producing agent, selected from the group consisting of polyethylene, copolymer or ethylene and vinyl acetate (EVA) or polyethylene terephthalate.

This material is also capable of converting the UV component of the. light source spectrum to red light. This material, however, retains its activity only within 300 days, since all oxohalogenides and especially oxoselenides of rare-earth elements decompose in air and, in particular, in the presence of moisture.

Summary of the invention

The main object of the present invention is to prolong the capability of the light-transforming material to convert UV-light into the red light with the same intensity of this conversion by enhancing the resistance of an active additive to the action of light, air and moisture.

Another object is to enlarge the range of substances suitable for manufacturing materials with light-transforming ability.

One more object is to increase the heat-protecting ability of the material.

The foregoing objects of the present invention are achieved by the provision of a light-transforming material containing a matrix and an active additive, converting UV-light into the orange-red spectral range. In accordance with the invention, as an active additive, this material contains apatite and at least one europium (III) composite compound of the general formula $Me_x{}^mEu_y{}^3R_z{}^n$ or a mixture of compound thereof with at least with one composite compound of samarium (III), terbium (III), or gadolinium (III), each of them having the general formula

$$Me_x{}^m M_y{}^3 R_z{}^n,$$

where $mx + 3y = nz$, $Me_x{}^m = Me_x{}^{m'} + Me_x{}^{m''} + ...$ , $R_z{}^n = R_z{}^{n'} + R_z{}^{n''} + ...$ , $mx = m'x' + m''x'' + ...$, $nz = n'z' + n''z'' + ...$, $x \geq 1.0 \geq y \geq 0.01$.

wherein

Me represents a metal selected from the group consisting of yttrium, lanthanum, cerium, praseodymium, neodymium, samarium, europium, gadolinium, dysprosium, holmium, erbium, ytterbium, aluminium, bismuth, tin, titanium, manganese, calcium, barium, zinc, cadmium, sodium, potassium, rubidium, cesium,

M represents a metal selected from the group consisting of europium, samarium, terbium, gadolinium;

R represents an element selected from the group consisting of oxygen, sulfur, fluorine, chlorine, bromine, phosphorus, boron, vanadium, molybdenum, tungsten, germanium, or combination with each other,

m and n are the charge of a Me or R ion, respectively.

The active additive can be distributed inside or over the surface of the matrix.

The material contains an active additive in an amount of at least 0.02 wt.% of the material.

The matrix is made light-transparent.

As an apatite, the material comprises natural or synthetic apatite having a crystalline structure, being in a finely divided state, its approximate formula being $Ca_{10}(PO_4)_6R'_2$ (where R' - F, Cl, or OH), or their mixture in any proportions.

As the composite compound, the material contains at least one composite compound wherein $nz = 3$, R - 0, Gal of the formula $Me_xM_yOGal$, Gal is F, Cl, Br; or wherein $nz = 6$, R - 0, Hal of the formula $Me_xM_yO_2Hal$, Hal is S or Se; or of the formula $Me_xM_yO_2S_{1\pm0.2}$ ; or wherein $nz = 6$, R - $VO_4$ of the formula $Me_xM_y(VO_4)_2$; or wherein R - $BO_3$, $PO_4$ of the formula $Me_xM_y(BO_3)_{z'}(PO_4)_{z''}$; or wherein R - $VO_4$, $PO_4$ of the formula $Me_xM_y(VO_4)_{z'}(PO_4)_{z''}$; or wherein R - $VO_4$, $PO_4$, $BO_3$ of the formula $Me_xM_y(VO_4)_{z'}(PO_4)_{z''}(BO_3)_{z''}$ ; or wherein R - $BO_2$, $WO_4$, $MoO_4$ of the formula $Me_xM_y(BO_2)_{z'}(WO_4)_{z''}$; or $Me_xM_y(BO_2)_{z'}(MoO_4)_{z''}$; or the mixture of compounds thereof.

A compound of the general formula $Me_xM_yOGal$ or $MO_xM_yO_2Hal$, the material comprises a product of processing of solid solutions of Me and M oxides in the medium of alkali halides or chalcogenides at 800-1200 °C; as a compound of the general formula $Me_xM_yO_2S_{1\pm0.2}$ the material comprises a product of processing of Me and M oxides in the presence of sulfur at 1200°C; as a compound of the general formula $Me_xM_y(VO_4)_2$ the material comprises a product of the solid-phase interaction of Me and M oxides with ammonium vanadate at 900-1100°C; as a compound of the general formula $Me_xM_y(BO_3)_{z'}(PO_4)_{z''}$ the material contains a product of the solid-phase interaction of Me and M oxides with boric acid and ammonium phosphate at 900-1100°C; as a compound of the general formula $Me_xM_y(VO_4)_{z'}(PO_4)_{z''}$, the material comprises a product of the solid-phase interaction of Me and M metal oxides with vanadate and ammonium phosphate at 1000-1200 °C; as a compound of the general formula $Me_xM_y(VO_4)_{z'}(PO_4)_{z''}(BO_3)_{z''}$. the material contains a product of the solid-phase interaction of Me and M oxides with vanadate and ammonium phosphate as well, as boric acid at 800-1100 °C ; as the compound of the general formula $Me_xM_y(BO_2)_{z'}(WO_4)_{z''}$; or $Me_xM_y(BO_2)_{z'}(MoO_4)_{z''}$ the material comprises a product of the solid-phase interaction of Me and M oxides, tungsten (molybdenum) and boric acid at 1100-1200°C.

The material may further comprise, at least, one coordination compound of metal E, selected from the group consisting of $[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E_4(AA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$,

E represents a metal selected from the group consisting of europium, samarium, terbium, gadolinium;

H represents hydrogen ion; TTA represents thenoyltrifluoroacetonatoanion, HFAA represents hexafluoroacetylacetonato-anion, BB represents benzoylbenzoato-anion, AA represents acetylacetonato-anion, TFA represnts trifluoroacetato-anion, Capr represents capronato-anion; Ter represents terephtalato-anion, Phen represents 1.10-phenantrolyne, TPhPO represents triphenylphosphine oxide, DPhG represents diphenylguanidine.

As a coordination compound of metal E, the material may comprise a product of treating europium (III), samarium (III), terbium (III) or gadolinium (III) nitrate with thenoyltriflouracetone, hexafluoroacetylacetone, or acetylacetone, benzoylbenzoic, or trifluoroacetic, caproic, or terephthalic acid and 1.10-phenanthroline, or triphenylphosphine oxide, or diphenylguanidine in an aqueous-alcoholic medium at 80-90°C.

The material can contain a matrix obtained in the form of film, plate, or textile cloth or a nonwoven or fibrous material.

The matrix can be made of thermoplastic polymers.

The matrix can be made of soluble polymers.

A matrix can be made of a polyester selected from the group consisting of polymethyl methacrylate. polybutylmetacrylate, polycarbonate (PC), polyethylene terephthalate and their derivatives, or of a polyolefin selected from the group consisting of polypropylene, polyvinylchloride, polystyrene, polyethylene and their derivatives,or of polyamide, or its derivatives; or of a copolymer of these polymers, or of a mixture of these polymers.

A matrix can be made of natural fibres, c.g., cotton, silk, wool, hemp, their mixtures or synthetic fibres, e.g., viscose , acetate, capron, nylon, polyamide, polyester, their copolymer, their mixture, or blend, or a mixture of natural and synthetic fibres.

The matrix can be made of silicate or modified silicate glass.

The matrix can be made of organic glass.

The material may further comprise a lacquer or an adhesive.

As the lacquer or adhesive the material may contain e.g. a silicone, polyester, polyepoxy, epoxy resin or a mixture thereof.

The outlined objects are also achieved by the provision of a composition for producing a light-transforming material , comprising a matrix-forming agent and an active additive. As the active additive the composition contains an apatite and at least one europium (III) composite compound of the general formula $Me_x^m Eu_y^3 R_z^n$, or a mixture of said compound at least with one composite compound of samarium (III), terbium (III), each of them having the general formula

$$Me_x^m M_y^3 R_z^n,$$

where $mx + 3y = nz$, $Me_x^m = Me_x^{m'} + Me_x^{m''} + ...$ , $R_z^n = R_z^{n'} + R_z^{n''} + ...$ , $mx = m'x' + m''x'' + ...$ , $nz = n'z' + n''z'' + ...$, $x \geq 1.0 \geq y \geq 0.01$.

wherein

Me represents a metal selected from the group consisting of yttrium, lanthanum, cerium, praseodymium, neodymium, samarium, europium, gadolinium, dysprosium, holmium, erbium, ytterbium, aluminium, bismuth, tin, titanium, manganese, calcium, barium, zinc, cadmium, sodium, potassium, rubidium, cesium;

M represents a metal selected from the group consisting of europium, samarium, terbium, gadolinium;

R represents an element selected from the group consisting of oxygen, sulfur, fluorine, chlorine, bromine phosphorus, boron, vanadium, molybdenum, tungsten, germanium, or compounds thereof.

m and n are the charge of a Me or R ion, respectively.

As the matrix-forming agent this composition comprises a thermoplastic or soluble polymer, or fibres (natural, synthetic, or mixed ), or a composition for the production of organic, silicate, or modified silicate glass or a lacquer/adhesive-forming substance, with the following proportion of the components (wt. %):

| | |
|---|---|
| Apatite | -0.01-10.0 |
| Composite compound | -0.01-10.0 |
| Matrix-forming agent | -the balance. |

The composition may further contain at least one coordination compound of metal E, selected from the group consisting of:

$[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3 (TPhPO)_2]$, $(DPhG)H[E_4(AA)_4]$ $[E(AA)_3(Phen)]$, $[E(BB)_3(Phen)]$, $[E(TFA)_3(Phen)]$, $(DPhG)H[E(TFA)_4]$, $[E(Capr)_3 (Phen)]$, $[E_2(Ter)_3(Phen)_2]$, $[E(NO_3)_3(Phen)_2]$ with the following proportions of the components, (wt. % )

| Apatite | - 0.01-10.0 |
|---|---|
| Composite compound | - 0.01-10.0 |
| Coordination compound | - 0.01-1.00 |
| Matrix-forming agent | - the balance. |

As the matrix-forming agent, the composition may contain a polymer selected from the group consisting of polymethyl methacrylate, polybutylmethacrylate, polycarbonate(PC), polyethylene terephthalate, polypropylene, polyvinyl chloride, polystyrene, polyethylene, polyamide, derivatives of these polymers, a copolymer of these polymers, or a mixture of polymers thereof.

As the matrix-forming agent, the composition may also contain a composition for producing silicate or modified silicate glass.

As the lacquer/adhesive-forming agent, the composition may contain a silicone, polyester, polyepoxy, epoxy resin or their mixture.

As natural fibres, the composition may contain fibers selected from the group consisting of silk, wool, cotton, hemp or their mixture.

As synthetic fibres, the composition may contain fibers selected from the group consisting of viscose, acetate, polyester, polyamide, polyacrylamide or their mixture.

To clarify the essence of the present invention we consider the general formula of composite compounds of rare-earth metals - phosphors, as an additive, and included into the proposed material:

$$Me_x{}^m M_y{}^3 R_z{}^n,$$

wherein $mx + 3y = nz$, $Me_x{}^m = Me_{x'}{}^{m'} + Me_{x''}{}^{m''} + ...$ , $R_z{}^n = R_{z'}{}^{n'} + R_{z''}{}^{n''} + ...$ , $mx = m'x' + m''x'' + ...$, $nz = n'z' + n''z'' + ...$, $x \geq 1.0 \geq y \geq 0.01$.

m and n are the charge of a Me or R ion, respectively.

This formula reflects the structure of composite compound comprising an activator ion - Me, a fluorescent center - ion M, arid also the anionic part of the compound - R, which compensates for the positive charge of Me and M, where m and n are the charge of the Me and R ions, respectively.

It is necessary to point out, that the composite compounds, proposed as active additives, are heteropolynuclear complexes, where the activator ion - Me and the fluorescent center - M are linked by bridge groups - R. The latter does not rule out the concept of "solid solutions", as just in solid solutions the formation of heteropolynuclear compounds is most likely.

As has been found with sufficient reliability, (E.F.Kustov, G.A.Bandarkin, E.N.Muravyov, V.P.Orlovsky. " Electronic spectra of compounds of rare earth elements " Ed. By I.V.Tananayev. Science, Moscow, 1981, p.183), heteropolynuclear compounds containing europium (III), provide the brightest fluorescence in the range of 610-630 nm (the most important range for provision of luminescent emission in the red spectral range). Therefore, the formula, which describes an elementary structure of compounds, proposed as an active additive, includes, at least two types of atoms - Me and M with indexes x and y when restricting value $x \geq 1.0 \geq y \geq 0.01$, where M should be at least Eu (III).

The necessary condition for the suitability of a composite compound for solving the posed problem is the presence of europium (III) ions in it. The minor role is played by compounds of samarium (III), terbium (III), gadolinium (III).

The ranges of variation of the values x and y are determined by the minimum value y = 0.01, since when the content of fluorescent center - M is less, transformation of UV-radiation is weak; from experience the value x = 1.0 is maximum.

The anionic part of composite in the presented formula is encompassed by the value $R_z$, which may comprise anions of different structure and in different proportions: $R_{z'} + R_{z''} + R_{z'''} ... + ...$ wherein $z = z' + z'' + z''' + ...$

For instance, the structure of the known composite compound - phosphor of yttrium-europium vanadate phosphate is described by the formula $Y_x Eu_y (PO_4)(VO_4)$, where:

$$Me - Y_x{}^3, M - Eu_y{}^3, R = (PO_4)_1{}^{3-} + (VO_4)_1{}^{3-};$$

nz = 1 x 3 + 1 x 3 = 6;
wherein x = 1,9, mx = 3 x 1,9 = 5,7;
wherein y = 0,1, 3y = 3 x 0,1 = 0,3, hence, mx + 3y = 5,7 + 0,3 = 6

and, hence, mx + 3y = nz.

The situation is also the same for the compound of the formula $Ba(Gd)_{1,9} Eu_{0,1} (WO_4)_4$ where:

$$Me_x^m = Me_{x'}^{m'} + Me_{x''}^{m''} = Ba_1^2 + Gd_{1,9}^3, M_y = Eu_{0,1}^3, R = (WO_4)_4^{2-};$$

z = 4, n = 2, nz =4 x 2=8;
wherein x' = 1, x" = 1,9, m'= 1,0, m" = 3,0,
mx = m'x' + m"x" =2 x 1 + 3 x 1,9 = 2 + 5,7 = 7,7;
wherein y = 0.1, 3y = 3 x 0.1 = 0.3, hence mx + 3y = 7.7 + 0.3 = 8.0 and,
therefore, mx + 3y = nz.

Thus, the proposed formula of heteropolynuclear composite compounds appears to be most complete for describing the structure of composite compounds (phosphors) among those we selected to achieve the technical result.

As found experimentally, the use of an apatite (natural or synthetic with mean granulometry of 4-5 μm) as an active additive, on the one hand, retains for a long period the fluorescence ability of composite compounds included in the structure of the light-transforming material, and, on the other hand, enhances the heat-protecting properties of the material, reinforces it and prolongs its service life.

In addition, we revealed that the combination of an apatite and a composite compound promotes an increased emission power in green and cyan spectral range.

The employed composite (heteropolynuclear) compounds of europium (III), samarium (III), terbium (III) and gadolinium (III), obtained by the method of solid-phase high-temperature synthesis, are very stable thermally. A combination with natural or synthetic apatite makes these compounds suitable for introducing in the structure of high-melting organic polymers, for instance, polyethylene terephthalate (lavsan) or polycarbonate (PC).

Coordination compounds of europium (III), samarium (III), terbium (III), gadolinium (III) are used as an additional component of an active additive, since they provide bright luminescence in the green and orange-red spectral range, are soluble in a polymer (with the exception of nitrates and terephtalate) and, due to absorbing UV-component of a sunlight first of all, they promote prolonged action of the composite compound - phosphor.

The necessary and sufficient content of apatite, composite compound and coordination compound of rare-earths elements in the proposed material is selected experimentally. The content of apatite and composite compound in the material less than 0.01 wt.% of each additive is found to be unefficient, since no technical result is achieved. An increase in their concentration up to more than 10.0 wt. % of each leads to an increased absorption of solar radiation in the material, indistinct transparency of the material if it is light-transparent, and also excessive consumption of the active additive without retaining the light-transforming ability for a longer period in the material. Only combination of the said particular features leads to the accomplishment of the object outlined, namely to the prolonged light-transforming ability of the material to convert the UV-light into red light and enhanced heat-protecting properties of the material with the same intensity of converting UV-emission into red spectral range.

It is necessary to point out, that the choice of the matrix-forming agent for the production of the proposed material depends on the field of application of the product made of this material. For instance, if the material is intended to be used for hothouse and greenhouse covering, it is obvious that the matrix should be a light-transparent film. Here, any known thermoplastic or soluble film-forming polymer, for instance, polymethylmethacrylate, polybutylmethacrylate, polycarbonate, polyethylene terephthalate, polypropylene, polyvinytchloride, polystyrene, polyethylene, polyamide can be used as a matrix-forming agent. The thermoplastic polymer, as a matrix-forming agent can be used for making a light-transforming material to produce biotechnological equipment, for instance, Petri dishes, test tubes, separating flasks, capillary tubes for cultivation of microorganisms and cell cultures; as well as to produce plates for winter greenhouse protection, fixed solariums and buildings for animals.

The composition for obtaining silicate (or other) glass, as a matrix-forming agent, can be used when the proposed material is intended to be applied , for instance, to glaze houses and office buildings, as well as greenhouses and buildings for animals, or , for instance, to make glasses, automobiles, sun-visors and awnings.

Natural and/or synthetic fibers, as the matrix-forming agent, can be employed for obtaining light-transforming textile cloths required, for instance, for manufacturing light-protective roof hoods and awnings, and also for producing light-protective clothes. Using artificial and, in particular, synthetic fibres, it is possible to make light-transforming nonwoven fabric and use it as a protecting material in agriculture.

Description of the preferred embodiments

An apatite (natural or synthetic), a europium composite compound and a matrix-forming agent suitable for further application are used to produce the proposed material.

As a natural apatite, it is most expedient to use colorless fine-crystalline apatite with mean grain composition of 4-5 µm.

The process of obtaining a synthetic apatite is known and is described in detail in literature (the method of production of fluoroapatite and hydroxyapatite is described by Yu. K.Voron'ko, A.V.Gorbachov, A.A.Zverev, A.A.Sobol ', N.N.Morozov, E.N.Murav'ev, Sh. A.Niyazov and V.P.Orlovskii in the article entitled "Raman Scattering and Luminescence Spectra of Compounds with the Structure of Apatite $Ca_5(PO_4)_3F$ and $Ca_5(PO_4)_3OH$. Activated with $Eu^3$ + Jons. " Inorganic Materials. 1992, v. 28, N. 3, p. 442; and by G.V.Rodicheva, V.P.Orlovskii, N.M.Romanova, A.V.Steblevskii, G.E.Sukhanova. Physicochemical Investigation of an Khibini Apatite and Its Comparison to Hydroxyapatite. Russian Journal of Inorganic Chemistry, 1996, v. 41, N. 5, p. 728; and the obtaining of hydroxyapatite is described by V.P. Orlovskii, Zh. A.Ezova, G.V.Rodicheva, E.M.Koval, G.E.Sukhanova. in their article entitled "Conditions for the formation of hydroxyapatite $CaCl_2(NH_4)_2HPO_4$ - $NH_4OH$ - $H_2O$ system (25°C)". Russian Journal of Inorganic Chemistry, 1992, v. 37, N. 4, p. 443).

The method of obtaining composite compounds as a component of an active additive, is also known (I.A. Bondar et all, "Compounds of rare-earth elements, silicates, germanates, phosphates, arsenates, vanadates ", series " Chemistry of rare elements " Ed.by I.V.Tananayev, Science, Moscow, 1983, p.254-257).

The methods of obtaining coordination compounds of europium, samarium, terbium and gadolinium are known and described by L.R.Melby, N.J.Rose, E.Abramson, J.C.Caris. in their paper " Synthesis and Fluorescence of some Trivalent Lanthanide Complexes". J.Amer. Chem. Soc., 1964, v. 86, 23, p.5117.

The composite compounds, as a component of the active additive, are obtained by the conventional method of high-temperature synthesis. In accordance with this method, oxides of europium (III), samarium (III), terbium (III), or gadolinium (III) in combination with oxide of yttrium (III) (or other corresponding metal), are mixed with corresponding components which form an anionic part (R) of the compound, and kept at 1100-1200°C for several hours. A clinker obtained in this way is then washed, dried and milled.

Examples

The obtaining of particular complex compounds - phosphors is illustrated by the following Examples.

Example 1. 100.0 g of lanthanum oxide are mixed with 5.7 g of europium oxide, 37.8 g of vanadate and 48.1 g of ammonium phosphate are added to the mixture. The resultant mixture (fusion mixture) is loaded in a container from glass-carbon and incinerated at 1200-1250 °C for 4 hours. Then, the container is slowly chilled and discharged. The clinker is leached with de-ionized water and fractionated down to a mean fine structure of 4 µm. The structure of the composite compound corresponds to the formula $La_{1,9}Eu_{0,1}(VO_4)(PO_4)$.

Example 2. 90.0 g of yttrium oxide are mixed with 10.0 g of europium oxide, the mixture is dissolved in nitric acid at 95°C, ammonium oxalate is added to the resultant solution, chilled down to 25°C and a homogeneous mixture of yttrium and europium oxalates is separated by filtration.

Then a fusion mixture is prepared for incineration containing a precipitate, 30.0 g of free sulfur, 100.0 g of sodium carbonate and 2.6 g of lithium fluoride. The mixture is put into a glass-carbon container and incinerated at 1220-1260°C for 4 hours. Then, the container is slowly chilled and discharged. The clinker is leached with de-ionized water and fractionated down to the mean fine structure of 4 µm. The structure of the obtained composite compound corresponds to the formula $Y_{1,9}Eu_{0,1}O_2S_1$.

Example 3. 100.0 g of yttrium oxide and 8.2 g of europium oxide are mixed, 109.1 g of ammonium vanadate are added to the fusion mixture. The mixture is loaded in a glass-carbon container and incinerated at 900-1100°C for 4 hours. Then the container is slowly chilled and discharged. The clinker is leached with de-ionized water and fractionated down to the mean fine structure of 5 µm. The structure of the obtained composite compound corresponds to the formula $Y_{1,95}Eu_{0,1}(VO_4)_2$.

Example 4. 100.0 g of lanthanum oxide and 5.7 g of europium oxide are mixed, 48.13 g of ammonium phosphate and 19.96 g of boric acid are added to the fusion mixture. This mixture is put into a glass-carbon container and incinerated at 900-1100 °C for 4 hours. Then the container is slowly chilled and discharged. The clinker is treated with de-ionized water and fractionated down to the mean fine structure of 4 µm. The structure of the composite compound corresponds to the formula $La_{1,9}Eu_{0,1}(BO_3)(PO_4)$.

Example 5. Is similar to Example 4, except that the starting a base mixture contains 100.0 g of yttrium oxide and 8.2 g of europium oxide, 69.5 g of ammonium phosphate and 28.8 g of boric acid. The structure of the obtained composite compound corresponds to the formula $Y_{1,9}Eu_{0,1}(BO_3)(PO_4)$.

Example 6. 100.0 g of yttrium oxide are mixed with 4.0 g of europium oxide. 63.8 g of vanadate and 40.6 g of ammonium phosphate , as well as 5.6 g of boric acid are added to the resulting mixture. The mixture is loaded in a container from glass-carbon and incinerated at 1200-1250°C for 4 hours. Then the container is slowly chilled and discharged. The clinker is treated with de-ionized water and fractionated down to the mean fine structure of 4 microns. The structure of the composite compound corresponds to the formula $Y_{1,95}Eu_{0,05}(VO_4)_{1.2}(PO_4)_{0.6}(BO_3)_{0.2}$.

Example 7. Is similar to Example 6, except that the starting mixture contains 100 g of yttrium oxide and 8.2 g of europium oxide, 54.5 g of vanadate, 48.6 g of ammonia phosphate and 8.6 g of boric acid. The structure of the composite compound corresponds to the formula $Y_{1,9}Eu_{0,1}(VO_4)_{1,0}(PO_4)_{0,7}(BO_3)_{0,3}$.

Example 8. 100.0 g of yttrium oxide are mixed with 8.2 g of europium oxide, 108.1 g of tungsten oxide and 28.8 g of boric acid are added to this mixture. The resultant mixture is loaded in a container from glass-carbon and incinerated at 900-1000°C for 4 hours. Then the container is slowly cooled and discharged. The clinker is leached with de-ionized water and fractionated down to the mean fine structure of 4 μm . The structure of the composite compound corresponds to the formula $Y_{1,9}Eu_{0,1}(BO_2)_2(WO_4)_2$.

Example 9. Is similar to Example 8, except that the starting mixture contains 67.1 g of molybdenum oxide instead of tungsten oxide. The structure of the composite compound corresponds to the formula $Y_{1,9}Eu_{0,1}(BO_2)_2$ $(MoO_4)_2$.

Example 10. 26.1 g of barium nitrate are mixed with 65.2 g of gadolinium oxide, 7.0 g of europium oxide, 43.2 g of molybdenum oxide. The resultant mixture is loaded in a container from glass-carbon and incinerated at 600°C for 2 hours, then, at 1100°C for 2 hours. The container is slowly cooled and discharged. The clinker is leached with de-ionized water and fractionated down to the mean fine structure of 5 μm. The structure of the composite compound obtained corresponds to the formula $BaGd_{1,8}Eu_{0,2}(MoO_4)_4$.

Example 11. 23.0 g of yttrium oxide are mixed with 3.5 g of europium oxide and 0.9 g of sodium fluoride. The resultant mixture is put in an alundum container and incinerated at 1100 - 1200°C for 4 hours. Then the container is slowly chilled and discharged. The clinker is leached with de-ionized water and fractionated down to the mean fine structure of 4 μm. The structure of the obtained composite compound corresponds to the formula $Y_{0,9}Eu_{0,1}$ OF.

Example 12. is similar to Example 2, except that the starting mixture contains 10.0 g of samarium oxide instead of europium oxide. The structure of the obtained composite compound corresponds to the formula $Y_{1,9}Sm_{0,1}O_2S_1$.

Example 13. Is similar to Example 2, except that the starting mixture contains 10.0 g of terbium oxide instead of europium oxide. The structure of the obtained composite compound corresponds to the formula $Y_{1,9}Tb_{0,1}O_2S_1$.

Example 14. Is similar to Example 2, except that the starting mixture contains 10.0 g of gadolinium oxide instead of europium oxide. The structure of the obtained composite compound corresponds to the formula $Y_{1,9}Gd_{0,1}O_2S_1$.

Example 15. Is similar to Example 2, except that the starting mixture contains 32.6 g of lanthanum oxide, 4.0 g of europium oxides, 15.0 g of free sulfur, 50.0 g of sodium carbonate and 1.3 g of lithium fluoride. The structure of the obtained composite compound corresponds to the formula $La_{1,9}Eu_{0,1}O_2S_1$.

Example 16. Is similar to Example 4, except that the starting mixture contains 5.6 g of samarium oxide instead of europium oxide. The structure of the obtained composite compound corresponds to the formula $La_{1,9}Sm_{0,1}(BO_3)$ $(PO_4)$.

Example 17. Is similar to Example 4, except that the starting mixture contains 5.5 g of terbium oxide instead of europium oxide. The structure of the obtained composite compound corresponds to the formula $La_{1,9}Tb_{0,1}(BO_3)$ $(PO_4)$.

The proposed coordination compounds of europium, samarium, terbium and gadolinium were obtained by treating their nitrates with corresponding acids and bases in an aqueous-alcoholic medium at 80-90°C, as illustrated by Examples 18-19.

Example 18. Europium (III) nitrate in the amount of 4.46 g was dissolved in 50 ml of ethanol with heating. 8.89 g of thenoyltrifluoroacetone in 10 ml of ethanol, then 8.44 g of diphenylguanidine in 15 ml of ethanol were added to the obtained solution. The solution was cooled, the precipitate was filtered out. The filtrate was allowed to stand for free evaporation. The amorphous - crystalline mass has a structure conforming to the formula $(DPhG)H[Eu(TTA)_4]$.

Example 19. 4.46 g of europium (III) nitrate was dissolved in 50 ml of hot water. 3.4 g of 1,10-phenanthroline in 10 ml of ethanol was added to the obtained solution. A crystalline precipitate formed immediately. The solution was cooled, the precipitate was filtered out on a glass porous filter, washed with cold water, then with ethanol and ether. The structure of the obtained compound corresponds to the formula $[Eu(NO_3)_3(Phen)_2]$.

Examples 1-17 illustrate the synthesis of composite compounds most available for commercial production.

The method of producing a light-transforming material containing a matrix and an active additive, wherein the matrix is made as a film or plate obtained from a thermoplastic or soluble polymer, does not differ from the method of obtaining polymer films or sheets described e.g., in CH 667463, GB 2158833.

Example 20. For producing a light-transforming material, a composition is prepared comprising, as the matrix-forming component, 99.8kg of granulated polyethylene, 0.1 kg of a natural apatite and 0.1 kg of composite compound having the structure $Y_{1,9}Eu_{0,1}(VO_4)_{1,5}(PO_4)_{0,5}$ in the form of fine powder with the mean dispersed structure of 4 μm. This composition is put in a mixer, then thoroughly stirred and extruded to produce a 100-150 μm thick film.

The obtained material contains a matrix and an active additive - 0.1 wt.% of a natural apatite and 0.1 wt. % of said yttrium-europium vanadate-phosphate. The active additive is distributed in the matrix made as a film.

The optical properties of the obtained material are represented in Table 1: the quantum efficiency of conversion of sunlight in the range of 280-400 nm is up to 85 %, light transparency in the range of 580-750 nm is 82 %, stability of the fluorescence properties is more than 650 days.

This material in the form of transparent film can be used for covering hothouses and greenhouses.

Examples 21-35 are represented in Table 1.

Table 1 illustrates the properties of the light-transforming material obtained as described in Example 20, except that other quantities of composite compounds of different structure and other quantities of natural and/or synthetic apatite are used as the active additive. A comparison of the properties of the proposed material and analogous properties of the prototype (last line in Table 1, Example 36) shows that the material can retain a light-transforming capability of conversion of UV-light into the red radiation spectral range up to 650 days with the same intensity of this transformation (stability of luminescence).

Examples 37-45 are represented in Table 2.

Table 2 demonstrates the properties of a light-transforming material made as a film, as described in Example 20, except that different polymers are used as the matrix-forming agent, and different amounts of composite and coordination compounds of different structure and different amounts of natural and/or synthetic apatite are used as the active additive.

As is seen from Table 2, the properties of the polymer used as the matrix-forming agent for producing this material, have no effect on the period of retaining the light-transforming capacity in the proposed material.

Furthermore, it is found that addition of a natural and/or synthetic apatite to the active additive strengthens the light-transforming material. For instance, the material containing a matrix made in the form of film, in particular, of polyethylene, as described in Example 20, and containing natural and synthetic apatites in an amount of 0.075 wt.% of each additive as the active additive and containing 0.1 wt. % of $Y_{1.95}Eu_{0.05}O_2S$ as the composite compound (Example 26), or containing 0.15 wt. % of a synthetic apatite and 0.1 wt. % of $Y_{1.95}Eu_{0.05}O_2S$ (Example 34) excels the prototype in tensile strength by 10 % and 2 times exceeds elongation of the material at rupture.

The heat-retaining properties of these materials were found to be enhanced compared with those of their prototype. For instance, the difference between the outdoor soil temperature and the soil temperature in the greenhouse protected with the material containing the additive according to the prototype was 2-5° C, while the difference of these temperatures in the case when greenhouses were protected with the material described in Example 26 and 34 reached 7-8° C.

Examples 46-48 are represented in Table 3.

Table 3 shows the properties of the light-transforming plate-like material made of silicate (Examples 46, 47, 48), of polymethylacrylate (Example 47), polycarbonate glasses (Example 46) with the surface coated with a lacquer composition containing an active additive distributed in it The material made in accordance with Examples 46-48 retained its light-transforming properties during 700 days.

Example 49. For producing the light-transforming material containing a matrix in the form of a polypropylene non-vowen cloth and an active additive, use was made of a composite compound of the formula $Y_{1.4}Eu_{0.1}O_2S_1$ in an amount of 0.1 kg, synthetic hydroxyapatite in an amount of 0.1 kg and 100.0 kg of propylene granules. The cloth was made by a conventional method. The resultant material retained its light-transforming properties for 600 days.

Example 50. For producing the light-transforming material containing a matrix made of a cotton fiber cloth 9.94 kg of ready textile cloth impregnated with a mixture of soluble polyurethane and 0.03 kg of synthetic fluoride apatite and 0.03 kg of a composite compound were used. The composite compound was of the formula $La_{1.9}Eu_{0.1}(VO_4)(PO_4)$.

The material retained its light-transforming ability for 600 days.

Example 51. For producing the light-transforming textile-like material containing polypropylene fibers as a matrix, 96.5 kg of granules of this polymer were used, mixed with an active additive (natural apatite), in an amount of 0.2 kg and with the composite compound $Y_{1.9}Eu_{0.1}O_2S_1$ in an amount of 0.3 kg.

Table 1.

Optical properties of light-transforming materials made as a film.

| Example | Matrix-forming component (polyethylene) wt. % | Active additive, wt. % | UV-light absorption range, nm | Quantum efficiency of conversion, % | Light-transparency of polymer covering at 580-700 nm, % | Stability of luminescent properties under solar radiation, days |
|---|---|---|---|---|---|---|
| 20 | 99.8 | Natural apatite -0.1 $Y_{1.95}Eu_{0.1}(VO_4)_{1.5}(PO_4)_{0.5}$ - 0.1 | 280-400 | up to 85 | 82 | 650 |
| 21 | 99.6 | Natural apatite - 0.05 $Gd_{1.9}Eu_{0.1}(VO_4)_{1.2}(PO_4)_{0.8-0.35}$ | 280-400 | up to 86 | 84 | 650 |
| 22 | 99.7 | Natural apatite - 0.1 $La_{1.9}Eu_{0.1}(VO_4)(PO_4)$ - 0.2 | 280-400 | up to 82 | 83 | 650 |
| 23 | 99.5 | Natural apatite - 0.2 $Y_{1.95}Eu_{0.1}(VO_4)_2$ - 0.3 | 280-400 | up to 82 | 82 | 600 |
| 24 | 98.6 | Natural apatite - 0.7 $Y_{1.9}Eu_{0.1}(BO_3)(PO_4)$ - 0.7 | 280-400 | up to 83 | 83 | 650 |
| 25 | 99.89 | Natural apatite - 0.01 $Y_{1.9}Eu_{0.1}O_2S$ - 0.10 | 280-400 | 81 | 80 | 650 |
| 26 | 99.75 | Apatite, natural and synthetic- 0.075 of each $Y_{1.95}Eu_{0.05}O_2S$ - 0.10 | 280-400 | 83 | 83 | 650 |
| 27 | 99.7 | Apatite, natural and synthetic - 0.1 of each $Y_{1.9}Eu_{0.1}(BO_2)_2(WO_4)_2$ - 0.1 | 280-400 | up to 75 | 74 | 650 |
| 28 | 99.8 | Synthetic apatite - 0.1 $Y_{1.95}Eu_{0.1}(VO_4)_{1.5}(PO_4)_{0.5}$ - 0.1 | 280-400 | up to 85 | 85 | 650 |

Table 1.
Optical properties of light-transforming materials, made as a film.

| Example | Matrix-forming component (polyethylene) wt. % | Active additive, wt. % | UV-light absorption range, nm | Quantum efficiency of conversion, % | Light-transparency of polymer covering at 580-700 nm, % | Stability of luminescent properties under solar radiation, days |
|---|---|---|---|---|---|---|
| 29 | 99.6 | Synthetic apatite - 0.05 $Gd_{1.9}Eu_{0.1}(VO_4)_{1.2}(PO_4)_{0.8-0.35}$ | 280-400 | up to 86 | 86 | 650 |
| 30 | 99.7 | Synthetic apatite - 0.1 $La_{1.9}Eu_{0.1}(VO_4)(PO_4)$ - 0.2 | 280-400 | up to 82 | 84 | 650 |
| 31 | 99.5 | Synthetic apatite - 0.2 $Y_{1.95}Eu_{0.1}(VO_4)_2$ - 0.3 | 280-400 | up to 82 | 85 | 600 |
| 32 | 98.6 | Synthetic apatite - 0.7 $Y_{1.9}Eu_{0.1}(BO_3)(PO_4)$ - 0.7 | 280-400 | up to 83 | 81 | 650 |
| 33 | 99.89 | Synthetic apatite - 0.01 $Y_{1.9}Eu_{0.1}O_2S$ - 0.10 | 280-400 | 82 | 83 | 650 |
| 34 | 99.75 | Synthetic apatite - 0.15 $Y_{1.95}Eu_{0.05}O_2S$ - 0.10 | 280-400 | 83 | 84 | 650 |
| 35 | 99.7 | Synthetic apatite - 0.2 $Y_{1.9}Eu_{0.1}(BO_2)_2(WO_4)_2$ - 0.1 | 280-400 | up to 75 | 79 | 650 |
| 36 | Known material, RU 2059999, Polyethylene - 99.5 | $La_{1.98}Eu_{0.02}OBr$ - 0.5 | 280-420 | up to 86 | 82 | 300 |

EP 1 035 160 B1

Table 2.

Optical properties of light-transforming materials based on different polymers

| Example | Polymeric base, wt. % | Active additive, wt.% | Value of UV-light absorption by the material in the range òf 300-400 nm, % | Value of conversion of absorbed UV-light, % | Light-transparency of polymer covering in the range of 580-700 nm, % | Stability of luminescent properties under solar radiation, days |
|---|---|---|---|---|---|---|
| 37 | Polyethylene 99.35 | natural apatite - 0.45 $Y_{1.9}Eu_{0.1}(VO_4)_{1.5}(PO_4)_{0.5}$ - 0.15 $Y_{1.9}Sm_{0.1}(VO_4)_{1.5}(PO_4)_{0.5}$ - 0.05 | 78 | 74 | 73 | up to 650 |
| 38 | Polyethylene 99.79 | natural apatite - 0,1 $Y_{1.9}Eu_{0.1}(VO_4)_{1.2}(PO_4)_{0.8}$ - 0.1 $Y_{1.9}Tb_{0.1}(VO_4)_{1.2}(PO_4)_{0.8}$ - 0.01 | 81 | 72 | 74 | up to 650 |
| 39 | Copolymer of ethylene and vinylacetate, 4% - 99.84 vinyl acetate | natural apatite - 0,10 $Y_{1.9}Eu_{0.1}(VO_4)_{1.2}(PO_4)_{0.6}(BO_3)_{0.2}$-0.05 $Eu(TTA)_3(Phen)$ - 0.01 | 81 | 78 | 73 | up to 650 |
| 40 | Polyethylene-terephtalate (lavsan)- 99.80 | Natural apatite – 0.05 $Y_{1.9}Eu_{0.1}(BO_3)(PO_4)$ -0.05 $Eu_2(Ter)_3(Phen)_2$ - 0.1 | 78 | 76 | 77 | up to 650 |

12

| Example | Polymeric base, wt. % | Active additive, Wt.% | Value of UV-light absorption by the material in the range of 300-400 nm, % | Value of conversion of absorbed UV-light, % | Light-transparency of polymer covering in the range of 580-700 nm, % | Stability of luminescent properties under solar radiation, days |
|---|---|---|---|---|---|---|
| 41 | Polyethylene 99.35 | Synthetic apatite - 0.45 $Y_{1.9}Eu_{0.1}(VO_4)_{1.5}(PO_4)_{0.5}$ - 0.15 $Y_{1.9}S\ m_{0.1}(VO_4)_{1.5}(PO_4)_{0.5}$ - 0.05 | up to 82 | 73 | 77 | up to 650 |
| 42 | Polyethylene 99.79 | Synthetic apatite - 0.1 $Y_{1.9}Eu_{0.1}(VO_4)_{1.2}(PO_4)_{0.8}$ - 0.1 $Y_{1.9}Tb_{0.1}(VO_4)_{1.2}(PO_4)_{0.8}$ - 0.01 | up to 85 | 72 | 74 | up to 650 |
| 43 | Copolymer of ethylene and vinyl acetate, 4% - 99.84 vinyl acetate | Synthetic apatite - 0.10 $Y_{1.9}Eu_{0.1}(VO_4)_{1.2}(PO_4)_{0.6}(BO_3)_{0.2}$-0.05 $(DPhG)H[Eu(TTA)_4]$- 0.01 | up to 83 | 80 | 74 | up to 650 |
| 44 | Polyethylene-terephtalate (lavsan) 99.80 | Synthetic apatite - 0.05 $Y_{1.9}Eu_{0.1}(BO_3)(PO_4)$ -0.05 $Eu_2(Ter)_3(Phen)_2$ - 0.1 | up to 81 | 79 | 79 | up to 650 |
| 45 | Polymethyl Methacrylate- 99.55 | Synthetic apatite -0.3 $La_{0.95}Eu_{0.05}O_2S$ - 0.1 $Eu(TTA)_3(Phen)$ - 0.05 | 78 | 74 | 73 | up to 650 |

Table 3.

Components of varnish compositions and optical properties of light-transforming materials on their bases.

| Example | Components of varnish compositions | Matrix, thickness, nm | Value of UV-light absorption in the range of 220-400 nm, % | Value of UV-light conversion, % | Light-transparency of the material in the range of 580-700 nm |
|---|---|---|---|---|---|
| 46 | Acryl varnish - 97.6<br>Natural apatite - 0.2<br>$Y_{1.9}Eu_{0.1}(VO_4)_{1.0}(PO_4)_{0.7}(BO_3)_{0.3}$ - 2.0<br>(DPhG)H[Eu(TTA)$_4$]- 0.2 | silicate glass, 4 mm<br>polycarbonate glass, 2 mm | 80<br><br>83 | 45-50<br><br>80 | 71<br><br>73 |
| 47 | Epoxy varnish - 99.5<br>Natural apatite - 0.4<br>$Y_{1.9}Eu_{0.1}O_2S$ - 0.4<br>(DPhG)H[Eu(HFAA)$_4$] - 0.1 | silicate glass, 4 mm<br>polymethylmetacrylate glass, 2 mm | 85<br><br>85 | 78<br><br>80 | 69<br><br>79 |
| 48 | 5%- aqueous solution of sodium silicate - 95.5<br>natural apatite - 4.0<br>$Y_{1.9}Eu_{0.1}(VO_4)_{1.2}(PO_4)_{0.8}$ | silicate glass, 4 mm | 79 | 77 | 66 |

The obtained composition was loaded in a mixer and thoroughly stirred, then the mixture was extruded into a film which was then cut into thread fibers. The resultant thread fibers were used for producing light-transforming textile-like material by conventional knitting techniques.

The obtained material retains its light-transforming properties for 650 days.

Example 52. For producing a light-transforming material containing a plate-like matrix, made e.g., from borate-silicate glass, use was made of 98.0 kg of the known composition for producing silicate glass, 0.3 kg of a mixture of natural and synthetic apatite in the 1:2 ratio, and 1.7 kg of the composite compound $Y_{1.9}Eu_{0.1}(BO_3)(PO_4)$ were added to it.

The obtained mixture was put in a mixer, thoroughly stirred, heated up to 1000° C. Glass plates were then shoped in a usual way. The obtained material retains its light-transforming properties for 700 days.

The proposed light-transforming material in the form of a light-transparent film was used to protect greenhouses and hothouses during cultivation of tomatoes, cucumbers, peppers, radishes, carrots, etc., in different climatic zones.

Example 53. This Example is represented in Table 4 which shows the results of Calendula growth in a hothouse protected with different films including the proposed light-transforming material made as described in Example 20.

A standard polyethylene film without light-transforming properties was also used as a test film.

Example 54. This Example is represented in Table 5 which demonstrates the results of radish growth in a greenhouse protected with different films including the light-transforming material made as described in Example 20.

A standard polyethylene film without light-transforming properties was also used as a test film.

Table 4.

| Productivity of Calendula growth in hothouses protected with different polyethylene films | | | | | |
|---|---|---|---|---|---|
| Experiment | Total weight of plants, g | Weight of leaves, g | Weight of shoots, g | Weight of roots, g | Number of leaves |
| Open area | 32.1±2,5 | 32.0±1.3 | 15.3±0.5 | 4.8±0.1 | 6.0±0.3 |
| Test film | 40.8±2.1 | 22.0±1.0 | 15.8±0.3 | 3.0±0.04 | 40.4±2.3 |
| Light-transforming film | 102.9±4.6 | 61.0±3.5 | 36.2±1.5 | 5.6±0.1 | 92.0±3.5 |

Table 5.

| Productivity of radish growth in hothouse protected with different polyethylene films | | | | |
|---|---|---|---|---|
| Experiment | Number of leaves | Weight of leaves, g | Weight of crops, g | Height of plants, cm |
| Open area | 8.3±0.3 | 34.1±0.8 | 34.4±1.1 | 29.0±2.1 |
| Test film | 7.54±0.2 | 35.8±0.9 | 40.9±1.5 | 30.5±2.3 |
| Light-transforming film | 6.0±0.2 | 43.4±1.0 | 55.9±1.6 | 34.4±0.5 |

The experimental results represented in Tables 4, 5 show that the proposed light-transforming material containing polyethylene film as a matrix is an efficient protection of hothouses.

Thus, using the present invention it is possible to prolong the of light-transforming effect of the material converting UV-radiation into the red radiation spectral range up to 650 days, retaining the intensity of this transformation.

The present invention also makes it possible to broaden the range of materials suitable for manufacturing products with-light-transforming properties. Furthermore, when producing a material containing a thermoplastic polymer as the matrix, the present invention allows an enhancement in the heat-protecting properties of the material and an increase in its strength.

Due to an increase in the strength of the material containing a polymer film as the matrix, it is possible to produce a thin film of at least 4 μm. Thus, this material can be used not only for the protection of hothouses and narrow beds but also for the protection of agricultural crop fields.

The present invention makes it possible to increase the intensity of UV radiation transformation into blue and green spectral range which according to our previous data increases the productivity of plants by at least 5%.

Industrial Applicability

The present invention can be used in agriculture for the protection of hothouses, greenhouses and buildings for animals; in medicine e.g., for preventing solar burns in humans and/or speeding-up their healing owing to the possibility of reducing the dose of UV radiation; in light industry, e.g., for making a light-transforming textile cloth to be used for manufacturing sun roof hoods, awnings, clothes; in biotechnology, e.g., for the development of devices for the cultivation of microorganisms and cell cultures under the conditions of transforming UV radiation into the red spectral range; in engineering, e.g., for manufacturing light-transforming glass to glaze habitation and office buildings, greenhouses and buildings for animals, as well as for manufacturing light-transforming glasses and car windows.

**Claims**

1. A light-transforming material comprising a matrix and an active additive capable of converting UV-light into the orange-red spectral range; wherein an active additive is an apatite and at least one composite compound of europium (III) with the general formula $Me_x^m M_y^3 R_z^n$ or a mixture of this compound with at least one composite compound of samarium (III) or terbium (III) or gadolinium (III) with the general formula for each

$$Me_x^m M_y^3 R_z^n$$

wherein $mx + 3y = nz$; $Me_x^m = Me_{x'}^{m'} + Me_{x''}^{m''} + ...$ ; $R_z^n = R_{z'}^{n'} + R_{z''}^{n''} + ...$ ;
$mx = m'x' + m''x'' + ....$;
$nz = n'z' + n''z'' + ...$; $x \geq 1, 0 \geq y \geq 0,01$, where m and n are the charge of a Me or R ion, respectively.
Me represents a metal selected from the group consisting of yttrium, lanthanum, cerium, praseodymium, neodymium, samarium, europium, gadolinium, dysprosium, holmium, erbium, ytterbium, aluminum, bismuth, tin, titanium, manganese, calcium, barium, zinc, cadmium, sodium, potassium, rubidium, cesium,
M represents a metal selected from the group consisting of europium, samarium, terbium, gadolinium;
R represents an element selected from the group consisting of oxygen, sulfur, fluorine, chlorine, bromine, phosphorus, boron, vanadium, molybdenum, tungsten, germanium or compounds thereof.

2. The material according to claim 1, wherein said active additive is distributed inside or over the surface of the matrix.

3. The material according to claim 1, wherein said active additive is in an amount of at least 0.02 wt. % of the material.

4. The material according to claim 1, wherein the matrix is made light transparent.

5. The material according to claim 1, wherein said apatite is a natural or synthetic apatite in crystalline lattice in a finely divided state corresponding to the formula $Ca_{10}(PO_4)_6 R_2$ (where R' - F, Cl, or OH), or is a mixture of said compounds in any proportions.

6. The material according to claim 1, wherein composite compound is at least one compound wherein $nz = 3$, $R = 0$, Gal of the formula $Me_x M_y OGal$, Gal = F, Cl, Br, or wherein $nz = 6$, $R = 0$, Hal of formula $Me_x M_y O_2 Hal$, Hal = S or Se, or of the formula $Me_x M_y O_2 S_{1\pm0,2}$, or wherein $nz = 6$ и $R = VO_4$ of the formula $Me_x M_y (VO_4)_2$ ,or wherein $R = BO_3$, $PO_4$, of the formula $Me_x M_y (BO_3)_{z'}(PO_4)_{z''}$, or wherein $R = VO_4$, $PO_4$, of the formula $Me_x M_y (VO_3)_{z'}(PO_4)_{z''}$, or wherein $R = VO_4$, $PO_4$, $BO_3$ of the formula $Me_x M_y (VO_4)_{z'}(PO_4)_{z''}(BO_3)_{z''}$ , or wherein $R = BO_2$, $WO_4$, $MoO_4$ of the formula $Me_x M_y (BO_2)_{z'}(WO_4)_{z''}$ or $Me_x M_y (BO_2)_{z'}(MoO_4)_{z''}$ , or a mixture of compounds thereof.

7. The material according to claim 6, wherein the composite compound of the general formula $Me_x M_y OGal$, or $Me_x M_y O_2 Hal$ is a product of processing solid solutions of Me and M oxides in the medium of alkali halides or chalkogenides at 800-1200°C.

8. The material according to claim 6, wherein the composite compound of the general formula $Me_x M_y O_2 S_{1\pm0,2}$ is a product of processing Me and M oxides in the presence of sulfur at 1200°C.

9. The material according to claim 6, wherein the composite compound of the general formula $Me_x M_y (VO_4)_2$, is a product of the interaction of solid-phase Me and M oxides with ammonium vanadate at 900-1100°C.

10. The material according tQ claim 6, wherein the composite compound of the general formula $Me_xM_y(BO_3)_{z'}(PO_4)_{z''}$, is a product of the interaction of solid-phase Me and M oxides with boric acid and ammonium phosphate at 900-1100 °C.

11. The material according to claim 6, wherein the composite compound of the general formula $Me_xM_y(VO_4)_{z'}(PO_4)_{z''}$, is a product of the interaction of solid-phase Me and M oxides with vanadate and ammonium phosphate at 1000-1200°C.

12. The material according to claim 6, wherein the composite compound of the general formula $Me_xM_y(VO_4)_{z'}(PO_4)_{z''}(BO_3)_{z''}$, is a product of the interaction of solid-phase Me and M oxides with vanadate and ammonium phosphate, and also boric acid at 800-1100°C.

13. The material according to claim 6, wherein the composite compound of the general formula $Me_xM_y(BO_2)_{z'}(WO_4)_{z''}$ or $Me_xM_y(BO_2)_{z'}(MoO_4)_{z''}$ is a product of the interaction of the solid-phase Me and M oxides, tungsten (molybdenum) with boric acid at 1100-1200°C.

14. The material according to claim 1, wherein the material further comprises at least one coordination compound of metal E, selected from the group consisting of $[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $[(DPhG)H[E(HFAA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$,
E represents a metal selected from the group consisting of europium, samarium, terbium, gadolinium;
H represents a hydrogen ion; TTA represents thenoyltrifluoroacetonate-anion, HFAA represents hexafluoroacetylacetonate-anion, BB represents benzoylbenzoato-anion, AA represents actylacetonate anion, TFA represents trifluoroacetato-anion, Cpr represents capronate-anion, Ter represents terephtalate-anion, Phen represents 1,10-phenanthroline, TPhPO is triphenylphosphine oxide, DPhG is diphenylguanidine.

15. The material according to claim 14, wherein the coordination compound of metal E is a product of treating of europium (III), samarium (III), terbium (III) or gadolinium (III) nitrate with thenoyltrifluoroacetone, or hexafluoracetylacetone, or acetylacetone, or benzoylbenzoic, or trifluoroacetic, or caproic, or terephtalic acid and 1,10-phenanthroline, or triphenylphosphine oxide, or diphenylguanidine in an aqueous-alcoholic medium at 80-90°C.

16. The material according to claim 1, wherein the matrix is made in the form of a film or a plate or textile cloth or non-vowen cloth or fibres.

17. The material according to claim 16, wherein the matrix is made of thermoplastic polymers.

18. The material according to claim 16, wherein the matrix is made of soluble polymers.

19. The material according to claim 16, wherein the matrix is made of a polyester selected from the group consisting of polymethyl methacrylate, polybutyl methacrylate, polycarbonate, polyethylene terephthalate and their derivatives, or a polyolefin selected from the group consisting of polypropylene, polyvinyl chloride, polystyrene, polyethylene and their derivative, or a polyamide or its derivatives; or copolymers of these polymers, or mixtures of these polymers.

20. The material according to claim 16, wherein the matrix is made of natural fibers, including cotton, silk, wool, hemp, blends thereof, or synthetic fibers, including viscose, acetate, capron, nylon, polyamide, polyester, their copolymers, blends thereof, or blends of natural and synthetic fibers.

21. The material according to claim 16, wherein the matrix is made of silicate or a modified silicate glass.

22. The material according to claim 16, wherein the matrix is made of organic glass.

23. The material according to claim 1, wherein it further comprises a lacquer or an adhesive.

24. The material according to claim 23, wherein said lacquer or adhesive is a silicone or polyester or polyepoxy or epoxy resin or a mixture thereof. admixture.

25. A composition for producing a light-transforming material comprising a matrix - forming agent and an active additive, wherein an active additive is an apatite and at least one composite compound of europium (III) of the general formula $Me_x^mM_y^3R_z^n$, or admixture of this compound with at least one composite compound of samarium (III), or terbium(III) or gadolinium(III), of the general formula for each:

$$Me_x^mM_y^3R_z^n,$$

wherein $mx + 3y = nz$; $Me_x^m = Me_{x'}^{m'} + Me_{x''}^{m''} + ...$ ; $R_z^n = R_{z'}^{n'} + R_{z''}^{n''} + ...$ ;
$mx = m'x' + m''x'' + ...$;
$nz = n'z' + n''z'' + ...$; $x \geq 1.0 \geq y \geq 0.01$.

Me represents a metal selected from the group consisting of yttrium, lanthanum, cerium, praseodymium, neodymium, samarium, europium, gadolinium, dysprosium, holmium, erbium, ytterbium, aluminum, bismuth, tin, titanium, manganese, calcium, barium, zinc, cadmium, sodium, potassium, rubidium, cesium,

M represents a metal selected from the group consisting of europium, samarium, terbium, gadolinium;

R represents an element selected from the group consisting of oxygen, sulfur, fluorine, chlorine, bromine, phosphorus, boron, vanadium, molybdenum, tungsten, germanium, or their combinations with each other,

m and n are the charge of a Me or R ion, respectively.

and a matrix-forming agent is either a thermoplastic or soluble polymer, or fibrous material (natural, synthetic or mixed), or a composition for producing organic glass, silicate, or a modified silicate glass or lacquer/adhesive-forming substance

In the following proportions of the components (wt.%):

| | |
|---|---|
| Apatite | -0.01-10.0 |
| Composite compound | - 0.01-10.0 |
| Matrix-forming agent | - the balance. |

**26.** The composition according to claim 25, wherein it further comprises at least one coordination compound of metal E, selected from the group consisting of [E(TTA)$_3$(Phen)], [E(TTA)$_3$(TPhPO)$_2$], (DPhG)H[E(TTA)$_4$], [(DPhG)H(E (HFAA)$_4$], [E(HFAA)$_3$(Phen)], [E(HFAA)$_3$(TPhPO)$_2$], (DPhG)H[E(AA)$_4$], [E(AA)$_3$(Phen)], [E(BB)$_3$(Phen)], [E(TFA)$_3$ (Phen)], (DPhG)H[E(TFA)$_4$], [E(Capr)$_3$(Phen)], [E$_2$(Ter)$_3$(Phen)$_2$], [E(NO$_3$)$_3$(Phen)$_2$],

E represents a metal selected from the group consisting of europium, samarium, terbium, gadolinium,

H represents a hydrogen ion; TTA represents thenoyltrifluoroacetonatoanion, HFAA represents hexafluoroacetylacetonato-anion, BB represents benzoylbenzoato-anion, AA represents acetylacetonato-anion, TFA represents trifluoroacetato-anion, Capr represents capronato- anion, Ter represents terephtalato-anion, Phen represents 1,10-phenantrolyne, TPhPO represents triphenylphosphine oxide, DPhG represents diphenylguanidine.

in the following proportions of the components (wt.% ):

| | |
|---|---|
| Apatite | -0.01-10.0 |
| Composite compound | -0.01-10.0 |
| Coordination compound | -0.01-1.00 |
| Composite compound | - 0.01-10.0 |
| Coordination compound | -0.01-1.00 |
| Matrix forming agent- | the balance. |

**27.** The composition according to claim 25, wherein the matrix-forming agent is a polymer selected from the group consisting of polymethyl methacrylate, polybutyl methacrylate, polycarbonate, polyethylene terephthalate, polypropylene, polyvinyl chloride, polystyrene, polyethylene, polyamide, their derivative, a copolymer of these polymers, or a mixture of said polymers.

**28.** The composition according to claim 25, wherein the matrix-forming agent is a silicone or polyester or polyepoxy or epoxy resin or their mixture.

**29.** The composition according to claim 25, wherein the matrix-forming agent is a natural fiber selected from the group consisting of silk, wool, cotton, hemp, their mixture.

**30.** The composition according to claim 25, wherein the matrix-forming agent is a synthetic fiber selected from the group consisting of viscose, acetate, polyester, polyamide, polyacrylamide, mixture thereof.

31. The composition according to claim 25, wherein the matrix-forming agent is a composition for producing silicate or modified silicate glass.

**Patentansprüche**

1. Licht-übertragendes Material, umfassend eine Matrix und ein aktives Additiv, das befähigt ist, UV-Licht in den orange-roten Spektralbereich zu überführen, worin das aktive Additiv ein Apatit und mindestens eine Komposit-Verbindung von Europium(III) der allgemeinen Formel $Me_x{}^mM_y{}^3R_z{}^n$ oder eine Mischung dieser Verbindung mit mindestens einer Komposit-Verbindung von Samarium(III) oder Terbium(III) oder Gadolinium(III) der allgemeinen Formel für jedes

$$Me_x{}^mM_y{}^3R_z{}^n$$

ist,

worin $mx + 3y = nz$; $Me_x{}^m = Me_x{}^{m'} + Me_{x'''}{}^{m''} + ...$;

$R_z{}^n = R_z{}^{n'} + R_{z''}{}^{n''} + ...$;

$mx = m'x' + m''x'' + ...$;

$nz = n'z' + n''z'' + ...$;

$x \geq 0, 0 \geq y \geq 0,01$, worin m und n die Ladung eines Mebzw. R-Ions sind,

Me ein Metall darstellt, ausgewählt aus der Gruppe, bestehend aus Yttrium, Lanthan, Cer, Praseodym, Neodym, Samarium, Europium, Gadolinium, Dysprosium, Holmium, Erbium, Ytterbium, Aluminium, Bismut, Zinn, Titan, Mangan, Calcium, Barium, Zink, Cadmium, Natrium, Kalium, Rubidium und Cäsium,

M ein Metall darstellt, ausgewählt aus der Gruppe, bestehend aus Europium, Samarium, Terbium und Gadolinium, und worin

R ein Element darstellt, ausgewählt aus der Gruppe, bestehend aus Sauerstoff, Schwefel, Fluor, Chlor, Brom, Phosphor, Bor, Vanadin, Molybdän, Wolfram, Germanium oder aus deren Verbindungen.

2. Material gemäß Anspruch 1, worin das genannte aktive Additiv innerhalb der oder über die Oberfläche der Matrix verteilt ist.

3. Material gemäß Anspruch 1, worin das genannte aktive Additiv in einer Menge von mindestens 0,02 Gew.% des Materials vorliegt.

4. Material gemäß Anspruch 1, worin die Matrix lichtdurchsichtig hergestellt ist.

5. Material gemäß Anspruch 1, worin der genannte Apatit ein natürlicher oder synthetischer Apatit in kristallinem Gitter in fein verteiltem Zustand entsprechend der Formel $Ca_{10}(PO_4)_6R_2'$ (worin R' = F, Cl oder OH) oder eine Mischung der genannten Verbindungen in einem Mengenanteil ist.

6. Material gemäß Anspruch 1, worin die Komposit-Verbindung mindestens eine Verbindung ist, worin $nz = 3$, $R = 0$, Gal der Formel $Me_xM_yOGal$, Gal = F, Cl, Br, oder worin $nz = 6$, $R = 0$, Hal der Formel $Me_xM_yO_2Hal$, Hal = S oder Se, oder der Formel $Me_xM_yO_2S_{1 \pm 0,2}$, oder worin $nz = 6$, $R = VO_4$ der Formel $Me_xM_y(VO_4)_2$, oder worin $R = BO_3$, $PO_4$, der Formel $Me_xM_y(BO_3)_{z'}(PO_4)_{z''}$, oder worin $R = VO_4$, $PO_4$, der Formel $Me_xM_y(VO_4)_{z'}(PO_4)_{z''}$, oder worin $R = VO_4$, $PO_4$, $BO_3$, der Formel $Me_xM_y(VO_4)_{z'}(PO_4)_{z''}(BO_3)_{z''}$, oder worin $R = BO_2$, $WO_4$, $MoO_4$, der Formel $Me_xM_y(BO_2)_{z'}(WO_4)_{z''}$ oder $Me_xM_y(BO_2)_{z'}(MoO_4)_{z''}$, oder eine Mischung aus Verbindungen davon ist.

7. Material gemäß Anspruch 6, worin die Komposit-Verbindung der allgemeinen Formel $Me_xM_yOGal$ oder $Me_xM_yO_2Hal$ ein Produkt der Verarbeitung fester Lösungen von Me- und M-Oxiden in einem Medium aus Alkalihalogeniden oder -chalkogeniden bei 800 bis 1200°C ist.

8. Material gemäß Anspruch 6, worin die Komponsit-Verbindung der allgemeinen Formel $Me_xM_yO_2S_{1 \pm 0,2}$ ein Produkt der Verarbeitung von Me- und M-Oxiden in der Gegenwart von Schwefel bei 1200°C ist.

9. Material gemäß Anspruch 6, worin die Komposit-Verbindung der allgemeinen Formel $Me_xM_y(VO_4)_2$ ein Produkt

der Wechselwirkung von Fest-Phasen-Me- und -M-Oxiden mit Ammoniumvanadat bei 900 bis 1100°C ist.

10. Material gemäß Anspruch 6, worin die Komposit-Verbindung der allgemeinen Formel $Me_xM_y(BO_3)_{z'}(PO_4)_{z''}$ ein Produkt der Wechselwirkung von Fest-Phasen-Me- und -M-Oxiden mit Borsäure und Ammoniumphosphat bei 900 bis 1100°C ist.

11. Material gemäß Anspruch 6, worin die Komposit-Verbindung der allgemeinen Formel $Me_xM_y(VO_4)_{z'}(PO_4)_{z''}$ ein Produkt der Wechselwirkung von Fest-Phasen-Me- und -M-Oxiden mit Vanadat und Ammoniumphosphat bei 1100 bis 1200°C ist.

12. Material gemäß Anspruch 6, worin die Komposit-Verbindung der allgemeinen Formel $Me_xM_y(VO_4)_{z'}(PO_4)_{z''}(BO_3)_{z''}$ ein Produkt der Wechselwirkung von Fest-Phasen-Me- und -M-Oxiden mit Vanadat und Ammoniumphosphat und auch mit Borsäure bei 800 bis 1100°C ist.

13. Material gemäß Anspruch 6, worin die Komposit-Verbindung der allgemeinen Formel $Me_xM_y(BO_2)_{z'}(WO_4)_{z''}$ oder $Me_xM_y(BO_2)_{z'}(MoO_4)_{z''}$ ein Produkt der Wechselwirkung der Fest-Phasen-Me- und -M-Oxide und von Wolfram (Molybdän) mit Borsäure bei 1100 bis 1200°C ist.

14. Material gemäß Ansrpuch 1, worin das Material ferner mindestens eine Koordinationsverbindung des Metalls E umfasst, ausgewählt aus der Gruppe, bestehend aus $[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E(HFAA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$ und aus $[E(NO_3)_3(Phen)_2]$, worin E ein Metall darstellt, ausgewählt aus der Gruppe, bestehend aus Europium, Samarium, Terbium und Gadolinium, und worin H ein Wasserstoff-Ion, TTA ein Thenoyltrifluoracetonat-Anion, HFAA ein Hexafluoracetylacetonat-Anion, BB ein Benzoylbenzoato-Anion, AA ein Acetylacetonat-Anion, TFA ein Trifluoracetato-Anion, Cpr ein Capronat-Anion, Ter ein Terephthalat-Anion, Phen 1,10-Phenanthrolin, TPhPO Triphenylphosphinoxid und DPhG Diphenylguanidin darstellen.

15. Material gemäß Anspruch 14, worin die Koordinationsverbindung des Metalls E ein Produkt der Behandlung von Europium(III)-, Samarium(III)-, Terbium(III)-oder von Gadolinium(III)nitrat mit Thenoyltrifluoraceton oder Hexafluoracetylaceton oder Acetylaceton oder Benzoylbenzoeoder Trifluoressig- oder Capron- oder mit Terephthalsäure bzw. mit 1,10-Phenanthrolin oder Triphenylphosphinoxid oder mit Diphenylguanidin in einem wässrig-alkoholischen Medium bei 80 bis 90°C ist.

16. Material nach Anspruch 1, worin die Matrix in der Form eines Films oder einer Platte oder einer Textilie oder eines Vlies oder von Fasern hergestellt ist.

17. Material gemäß Anspruch 16, worin die Matrix aus thermoplastischen Polymeren hergestellt ist.

18. Material gemäß Anspruch 16, worin die Matrix aus löslichen Polymeren hergestellt ist.

19. Material gemäß Anspruch 18, worin die Matrix aus einem Polyester, ausgewählt aus der Gruppe, bestehend aus Polymethylmethacrylat, Polybutylmethacrylat, Polycarbonat, Polyethylenterephthalat und deren Derivaten, oder aus einem Polyolefin, ausgewählt aus der Gruppe, bestehend aus Polypropylen, Polyvinylchlorid, Polystyrol, Polyethylen und deren Derivaten, oder aus einem Polyamid und seinen Derivaten oder aus Copolymeren dieser Polymeren oder aus Mischungen dieser Polymeren hergestellt ist.

20. Material gemäß Anspruch 16, worin die Matrix aus natürlichen Fasern, einschließlich Baumwolle, Seide, Wolle, Hanf, Mischungen davon, oder aus synthetischen Fasern, einschließlich Viskose, Acetat, Capron, Nylon, Polyamid, Polyester, deren Copolymeren, Mischungen davon, oder aus Mischungen natürlicher und synthetischer Fasern hergestellt ist.

21. Material gemäß Anspruch 16, worin die Matrix aus Silikat- oder einem modifizierten Silikat-Glas hergestellt ist.

22. Material gemäß Anspruch 16, worin die Matrix aus organischem Glas hergestellt ist.

23. Material gemäß Anspruch 1, welches ferner einen Lack oder einen Klebstoff umfasst.

24. Material gemäß Ansrpuch 23, worin der genannte Lack oder Klebstoff ein Silicon- oder Polyester- oder Polyepoxy- oder Epoxy-Harz oder eine Mischung davon in Abmischung sind.

25. Zusammensetzung zur Herstellung eines Lichtübertragenden Materials, umfassend ein Matrix-bildendes Mittel und ein aktives Additiv, worin das aktive Additiv ein Apatit und mindestens eine Komposit-Verbindung von Europium (III) der allgemeinen Formel $Me_x^m M_y^3 R_z^n$ oder eine Abmischung dieser Verbindung mit mindestens einer Komposit-Verbindung von Samarium(III) oder Terbium(III) oder Gadolinium(III) der allgemeinen Formel für jedes

$$Me_x^m M_y^3 R_z^n$$

ist,
worin $mx + 3y = nz$; $Me_x^m = Me_x^{m'} + Me_{x'''}^{m''} + ...$;
$R_z^n = R_z^{n'} + R_{z''}^{n''} + ...$;
$mx = m'x' + m''x'' + ...$ ;
$nz = n'z' + n''z'' + ...$;
$x \geq 0, 0 \geq y \geq 0,01$, worin m und n die Ladung eines Me- bzw. R-Ions sind,
Me ein Metall darstellt, ausgewählt aus der Gruppe, bestehend aus Yttrium, Lanthan, Cer, Praseodym, Neodym, Samarium, Europium, Gadolinium, Dysprosium, Holmium, Erbium, Ytterbium, Aluminium, Bismut, Zinn, Titan, Mangan, Calcium, Barium, Zink, Cadmium, Natrium, Kalium, Rubidium und Cäsium,
M ein Metall darstellt, ausgewählt aus der Gruppe, bestehend aus Europium, Samarium, Terbium und Gadolinium, und worin
R ein Element darstellt, ausgewählt aus der Gruppe, bestehend aus Sauerstoff, Schwefel, Fluor, Chlor, Brom, Phosphor, Bor, Vanadin, Molybdän, Wolfram, Germanium oder aus deren Kombinationen miteinander,
m und n die Ladung des Me- bzw. R-Ions sind,
und worin ein Matrix-bildendes Mittel entweder ein thermoplastisches oder lösliches Polymer oder ein faserartiges Material (natürliches, synthetisches oder gemischtes) oder eine Zusammensetzung zur Herstellung von organischem Glas, Silikat- oder einem modifizierten Silikat-Glas oder eine Lack/Klebstoff bildende Substanz
in den folgenden Mengenverhältnissen der Komponenten (Gew.%) sind:

| Apatit | 0,01 bis 10,0 |
|---|---|
| Komposit-Verbindung | 0,01 bis 10,0 |
| Matrix-bildendes Mittel | Rest |

26. Zusammensetzung gemäß Anspruch 25, welche ferner mindestens eine Koordinationsverbindung des Metalls E, ausgewählt aus der Gruppe, bestehend aus [E(TTA)₃(Phen)], [E(TTA)₃(TPPO)₂], (DPhG)H[E(TTA)₄], (DPG)H[E(HFAA)₄], [E(HFAA)₃(Phen)], [E(HFAA)₃(TPhPO)₂], (DPhG)H[E(HFAA)₄], [E(AA)₃(Phen)], [E(BB)₃(Phen)], [E(TFA)₃(Phen)], (DPhG)H[E(TFA)₄], [E(Capr)₃(Phen)], [E₂(Ter)₃(Phen)₂] und aus [E(NO₃)₃(Phen)₂],
worin E ein Metall darstellt, ausgewählt aus der Gruppe, bestehend aus Europium, Samarium, Terbium und Gadolinium, und worin
H ein Wasserstoff-Ion, TTA ein Thenoyltrifluoracetonat-Anion, HFAA ein Hexafluoracetylacetonat-Anion, BB ein Benzoylbenzoato-Anion, AA ein Acetylacetonat-Anion, TFA ein Trifluoracetato-Anion, Cpr ein Capronat-Anion, Ter ein Terephthalat-Anion, Phen 1,10-Phenanthrolin, TPhPO Triphenylphosphinoxid und DPhG Diphenylguanidin darstellen,
in den folgenden Mengenanteilen der Komponenten (Gew.%) umfasst:

| Apatit | 0,01 bis 10,0 |
|---|---|
| Komposit-Verbindung | 0,01 bis 10,0 |
| Koordinationsverbindung | 0,01 bis 1,00 |
| Matrix-bildendes Mittel | Rest |

27. Zusammensetzung gemäß Anspruch 25, worin das Matrixbildende Mittel ein Polymer ist, ausgewählt aus der Gruppe, bestehend aus Polymethylmethacrylat, Polybutylmethacrylat, Polycarbonat, Polyethylenterephthalat, Polypropylen, Polyvinylchlorid, Polystyrol, Polyethylen, Polyamid, deren Derivaten, einem Copolymer dieser Polymeren oder aus einer Mischung der genannten Polymeren.

**28.** Zusammensetzung gemäß Anspruch 25, worin das Matrixbildende Mittel ein Silicon- oder Polyester- oder Polyepoxyoder Epoxyharz oder deren Mischung ist.

**29.** Zusammensetzung gemäß Anspruch 25, worin das Matrixbildende Mittel eine natürliche Faser ist, ausgewhält aus der Gruppe, bestehend aus Seide, Wolle, Baumwolle, Hanf und deren Mischung.

**30.** Zusammensetzung gemäß Anspruch 25, worin das Matrixbildende Mittel eine synthetische Faser ist, ausgewählt aus der Gruppe, bestehend aus Viskose, Acetat, Polyester, Polyamid, Polyacrylamid und aus einer Mischung davon.

**31.** Zusammensetzung gemäß Anspruch 25, worin das Matrixbildende Mittel eine Zusammensetzung zur Herstellung von Silikat- oder modifiziertem Silikat-Glas ist.

## Revendications

**1.** Matériau transformant la lumière comprenant une matrice et un additif actif capable de convertir une lumière UV en la plage spectrale orange-rouge, dans lequel un additif actif est une apatite et au moins un composé composite d'europium (III) présentant la formule générale $Me_x{}^mM_y{}^3R_z{}^n$, ou un mélange de ce composé avec au moins un composé composite de samarium (III) ou de terbium (III) ou de gadolinium (III) présentant la formule générale pour chacun

$$Me_x{}^mM_y{}^3R_z{}^n$$

dans laquelle $mx + 3y = nz$, $Me_x{}^m = Me_{x'}{}^{m'} + Me_{x''}{}^{m''} + ...$,
$R_z{}^n = R_{z'}{}^{n'} + R_{z''}{}^{n''} + ...$,
$mx = m'x' + m''x'' + ...$,
$nz = n'z' + n''z'' + ...$, $x \geq 1,0 \geq y \geq 0,01$, où m et n représentent la charge d'un ion Me ou R, respectivement.

Me représente un métal choisi parmi le groupe constitué de l'yttrium, du lanthane, du cérium, du praséodyme, du néodyme, du samarium, de l'europium, du gadolinium, du dysprosium, de l'holmium, de l'erbium, de l'ytterbium, de l'aluminium, du bismuth, de l'étain, du titane, du manganèse, du calcium, du baryum, du zinc, du cadmium, du sodium, du potassium, du rubidium, du césium,

M représente un métal choisi parmi le groupe constitué de l'europium, du samarium, du terbium, du gadolinium,

R représente un élément choisi parmi le groupe constitué de l'oxygène, du soufre, du fluor, du chlore, du brome, du phosphore, du bore, du vanadium, du molybdène, du tungstène, du germanium ou de composés de ceux-ci.

**2.** Matériau selon la revendication 1, dans lequel ledit additif actif est distribué à l'intérieur ou sur la surface de la matrice.

**3.** Matériau selon la revendication 1, dans lequel ledit additif actif se trouve dans une proportion d'au moins 0,02 % en poids du matériau.

**4.** Matériau selon la revendication 1, dans lequel la matrice est rendue transparente à la lumière.

**5.** Matériau selon la revendication 1, dans lequel ladite apatite est une apatite naturelle ou synthétique en réseau cristallin dans un état finement divisé correspondant à la formule $Ca_{10}(PO_4)_6R_2'$ (où R' = F, Cl ou OH), ou est un mélange desdits composés dans n'importe quelles proportions.

**6.** Matériau selon la revendication 1, dans lequel le composé composite est au moins un composé dans lequel $nz = 3$, $R = 0$, Gal de la formule $Me_xM_yOGal$, Gal = F, Cl, Br ou dans lequel $nz = 6$, $R = 0$, Hal de formule $Me_xM_yO_2Hal$, Hal = S ou Se, ou de la formule $Me_xM_yO_2S_{1 \pm 0,2}$, ou dans lequel $nz = 6$, $R = VO_4$ de la formule $Me_xM_y(VO_4)_2$, ou dans lequel $R = BO_3, PO_4$, de la formule $Me_xM_y(BO_3)_{z'}(PO_4)_{z''}$, ou dans lequel $R = VO_4, PO_4$, de la formule $Me_xM_y(VO_4)_{z'}(PO_4)_{z''}$, ou dans lequel $R = VO_4, PO_4, BO_3$ de la formule $Me_xM_y(VO_4)_{z'}(PO_4)_{z''}(BO_3)_{z'''}$, ou dans lequel $R = BO_2, WO_4, MoO_4$ de la formule $Me_xM_y(BO_2)_{z'}(WO_4)_{z''}$ ou $Me_xM_y(BO_2)_{z'}(MoO_4)_{z''}$, ou un mélange de composés de ceux-ci.

**7.** Matériau selon la revendication 6, dans lequel le composé composite de la formule générale $Me_xM_yOGal$, ou $Me_xM_yO_2Hal$ est un produit d'un traitement de solutions solides d'oxydes de Me et de M dans le milieu d'halogénures ou de chalcogénures alcalins à une température de 800 à 1200°C.

**8.** Matériau selon la revendication 6, dans lequel le composé composite de la formule générale $Me_xM_yO_2S_{1\pm0,2}$ est un produit d'un traitement d'oxydes de Me et de M en présence de soufre à 1200°C.

**9.** Matériau selon la revendication 6, dans lequel le composé composite de la formule générale $Me_xM_y(VO_4)_2$ est un produit de l'interaction d'oxydes de Me et de M en phase solide avec du vanadate d'ammonium à une température de 900 à 1100°C.

**10.** Matériau selon la revendication 6, dans lequel le composé composite de la formule générale $Me_xM_y(BO_3)_{z'}(PO_4)_{z''}$ est un produit de l'interaction d'oxydes de Me et de M en phase solide avec de l'acide borique et du phosphate d'ammonium à une température de 900 à 1100°C.

**11.** Matériau selon la revendication 6, dans lequel le composé composite de la formule générale $Me_xM_y(VO_4)_{z'}(PO_4)_{z''}$ est un produit de l'interaction d'oxydes de Me et de M en phase solide avec un vanadate et du phosphate d'ammonium à une température de 1000 à 1200°C.

**12.** Matériau selon la revendication 6, dans lequel le composé composite de la formule générale $Me_xM_y(VO_4)_{z'}(PO_4)_{z''}(BO_3)_{z'''}$ est un produit de l'interaction d'oxydes de Me et de M en phase solide avec un vanadate et du phosphate d'ammonium, et également de l'acide borique à une température 800 à 1100°C.

**13.** Matériau selon la revendication 6, dans lequel le composé composite de la formule générale $Me_xM_y(BO_2)_{z'}(WO_4)_{z''}$ ou $Me_xM_y(BO_2)_{z'}(MoO_4)_{z''}$ est un produit de l'interaction des oxydes de Me et de M, de tungstène (molybdène) en phase solide avec de l'acide borique à une température de 1100 à 1200°C.

**14.** Matériau selon la revendication 1, dans lequel le matériau comprend en outre au moins un composé de coordination d'un métal E, choisi parmi le groupe constitué de $[E(TTA)_3(Phen)]$, $[E(TTA)_3(TPhPO)_2]$, $(DPhG)H[E(TTA)_4]$, $(DPhG)H[E(HFAA)_4]$, $[E(HFAA)_3(Phen)]$, $[E(HFAA)_3(TPhPO)_2]$, $(DPhG)H[E(HFAA)_4]$, $[E(AA)_3(Phen)]$, $[E(BB)_3(Phen)]$, $[E(TFA)_3(Phen)]$, $(DPhG)H[E(TFA)_4]$, $[E(Capr)_3(Phen)]$, $[E_2(Ter)_3(Phen)_2]$, $[E(NO_3)_3(Phen)_2]$
E représente un métal choisi parmi le groupe constitué de l'europium, du samarium, du terbium, du gadolinium, H représente un ion hydrogène, TTA représente l'anion thénoyltrifluoroacétonate, HFAA représente l'anion hexafluoroacétylacétonate, BB représente l'anion benzoylbenzoate, AA représente l'anion acétylacétonate, TFA représente l'anion trifluoroacétate, Cpr représente l'anion capronate, Ter représente l'anion téréphtalate, Phen représente la 1,10-phénantroline, TPhPO est l'oxyde de triphénylphosphine, DPhG est la diphénylguanidine.

**15.** Matériau selon la revendication 14, dans lequel le composé de coordination du métal E est un produit d'un traitement du nitrate d'europium (III), de samarium (III), de terbium (III) ou de gadolinium (III) avec de la thénoyltrifluoroacétone, ou de l'hexafluoroacétylacétone, ou de l'acétylacétone, ou de l'acide benzoylbenzoïque, ou trifluoroacétique, ou caproïque, ou téréphtalique et de la 1,10-phénanthroline, ou de l'oxyde de triphénylphosphine, ou de la diphénylguanidine dans un milieu aqueux-alcoolique à une température de 80 à 90°C.

**16.** Matériau selon la revendication 1, dans lequel la matrice est réalisée sous la forme d'un film, ou d'une plaque, ou d'une étoffe textile, ou d'une étoffe non tissée, ou de fibres.

**17.** Matériau selon la revendication 16, dans lequel la matrice est faite de polymères thermoplastiques.

**18.** Matériau selon la revendication 16, dans lequel la matrice est faite de polymères solubles.

**19.** Matériau selon la revendication 16, dans lequel la matrice est faite d'un polyester choisi parmi le groupe constitué de polyméthacrylate de méthyle, de polyméthacrylate de butyle, de polycarbonate, de polytéréphtalate d'éthylène et de leurs dérivés, ou d'une polyoléfine choisie parmi le groupe constitué de polypropylène, de polychlorure de vinyle, de polystyrène, de polyéthylène et de leurs dérivés, ou d'un polyamide ou de ses dérivés, ou de copolymères de ces polymères, ou de mélanges de ces polymères.

**20.** Matériau selon la revendication 16, dans lequel la matrice est faite de fibres naturelles, comprenant du coton, de la soie, de la laine, du chanvre, des mélanges de ceux-ci, ou de fibres synthétiques, comprenant de la viscose, de l'acétate, du capron, du nylon, du polyamide, du polyester, leurs copolymères, des mélanges de ceux-ci, ou des mélanges de fibres naturelles et synthétiques.

**21.** Matériau selon la revendication 16, dans lequel la matrice est faite d'un verre de silicate ou de silicate modifié.

**22.** Matériau selon la revendication 16, dans lequel la matrice est faite de verre organique.

**23.** Matériau selon la revendication 1, dans lequel il comprend en outre une laque ou un adhésif.

**24.** Matériau selon la revendication 23, dans lequel ladite laque ou ledit adhésif est une résine silicone ou polyester ou polyéphoxy ou époxy ou un mélange de celles-ci, en admixtion.

**25.** Composition destinée à produire un matériau transformant la lumière comprenant un agent de formation de matrice et un additif actif, dans laquelle un additif actif est une apatite et au moins un composé composite d'europium (III) de la formule générale $Me_x^m M_y^3 R_z^n$, ou une admixtion de ce composé avec au moins un composé composite de samarium (III) ou de terbium (III) ou de gadolinium (III) de la formule générale pour chacun

$$Me_x{}^m M_y{}^3 R_z{}^n$$

dans laquelle $mx + 3y = nz$, $Me_x{}^m = Me_x{}^{m'} + Me_{x''}{}^{m''} + ...$,
$R_z{}^n = R_z{}^{n'} + R_{z''}{}^{n''} + ...$,
$mx = m'x' + m''x'' + ...$,
$nz = n'z' + n''z'' + ...$, $x \geq 1,0 \geq y \geq 0,01$.

Me représente un métal choisi parmi le groupe constitué de l'yttrium, du lanthane, du cérium, du praséodyme, du néodyme, du samarium, de l'europium, du gadolinium, du dysprosium, de l'holmium, de l'erbium, de l'ytterbium, de l'aluminium, du bismuth, de l'étain, du titane, du manganèse, du calcium, du baryum, du zinc, du cadmium, du sodium, du potassium, du rubidium, du césium,

M représente un métal choisi parmi le groupe constitué de l'europium, du samarium, du terbium, du gadolinium,

R représente un élément choisi parmi le groupe constitué de l'oxygène, du soufre, du fluor, du chlore, du brome, du phosphore, du bore, du vanadium, du molybdène, du tungstène, du germanium ou de leurs combinaisons les uns avec les autres,

m et n représentent la charge d'un ion Me ou R, respectivement,

et un agent de formation de matrice est soit un polymère thermoplastique ou soluble, soit un matériau fibreux (naturel, synthétique ou mixte), soit une composition destinée à produire un verre organique, un verre de silicate ou de silicate modifié ou une substance formant une laque/un adhésif

selon les proportions suivantes des composants (% en poids) :

| | |
|---|---|
| Apatite | -0,01 à 10,0 |
| Composé composite | -0,01 à 10,0 |
| Agent de formation de matrice | - le complément. |

**26.** Composition selon la revendication 25, dans laquelle elle comprend en outre au moins un composé de coordination d'un métal E, choisi parmi le groupe constitué de [E(TTA)$_3$(Phen)], [E(TTA)$_3$(TPhPO)$_2$], (DPhG)H[E (TTA)$_4$], (DPhG) H[E(HFAA)$_4$], [E(HFAA)$_3$(Phen)], [E(HFAA)$_3$(TPhPO)$_2$], (DPhG)H[E(AA)$_4$], [E(AA)$_3$(Phen)], [E(BB)$_3$ (Phen)], [E(TFA)$_3$(Phen)], (DPhG)H[E(TFA)$_4$], [E(Capr)$_3$(Phen)], [E$_2$(Ter)$_3$(Phen)$_2$], [E(NO$_3$)$_3$(Phen)$_2$],

E représente un métal choisi parmi le groupe constitué de l'europium, du samarium, du terbium, du gadolinium,

H représente un ion hydrogène, TTA représente l'anion thénoyltrifluoroacétonate, HFAA représente l'anion hexafluoroacétylacétonate, BB représente l'anion benzoylbenzoate, AA représente l'anion acétylacétonate, TFA représente l'anion trifluoroacétate, Capr représente l'anion capronate, Ter représente l'anion téréphtalate, Phen représente la 1,10-phénantroline, TPhPO représente l'oxyde de triphénylphosphine, DPhG représente la diphénylguanidine

selon les proportions suivantes des composants (% en poids) :

| | |
|---|---|
| Apatite | -0,01 à 10,0 |

(suite)

| Composé composite | -0,01 à 10,0 |
| Composé de coordination | -0,01 à 1,00 |
| Agent de formation de matrice | - le complément. |

27. Composition selon la revendication 25, dans laquelle l'agent de formation de matrice est un polymère choisi parmi le groupe constitué de polyméthacrylate de méthyle, de polyméthacrylate de butyle, de polycarbonate, de polytéréphtalate d'éthylène, le polypropylène, de polychlorure de vinyle, de polystyrène, de polyéthylène, de polyamide, de leurs dérivés, d'un copolymère de ces polymères, ou d'un mélange desdits polymères.

28. Composition selon la revendication 25, dans laquelle l'agent de formation de matrice est une résine silicone ou polyester ou polyépoxy ou époxy ou leur mélange.

29. Composition selon la revendication 25, dans laquelle l'agent de formation de matrice est une fibre naturelle choisie parmi le groupe constitué de la soie, de la laine, du coton, du chanvre, de leur mélange.

30. Composition selon la revendication 25, dans laquelle l'agent de formation de matrice est une fibre synthétique choisie parmi le groupe constitué de viscose, d'acétate, de polyester, de polyamide, de polyacrylamide, d'un mélange de ceux-ci.

31. Composition selon la revendication 25, dans laquelle l'agent de formation de matrice est une composition destinée à produire un verre de silicate ou de silicate modifié.